# EUROPÄISCHE PATENTSCHRIFT

(11) **EP 3 673 543 B1**
(45) Veröffentlichungstag und Bekanntmachung des Hinweises auf die Patenterteilung: **17.08.2022**
(21) Anmeldenummer: 18762460.6
(22) Anmeldetag: 17.08.2018
(51) Int. Cl.: H01R 24/76, H01R 13/447, H01R 25/00, H02G 3/18, H01R 103/00

(54) **TISCH- ODER GERÄTEPLATTENANSCHLUSSFELD**
TABLE-TOP OR EQUIPMENT-TOP CONNECTION COMPARTMENT
PANNEAU DE CONNECTEURS DE PLATEAU DE TABLE OU D'APPAREIL

(30) Priorität: 22.08.2017 DE 102017119203
(43) Veröffentlichungstag der Anmeldung: 01.07.2020
(73) Patentinhaber: Schulte-Elektrotechnik GmbH & Co. KG, 58515 Lüdenscheid (DE)
(72) Erfinder: RITTINGHAUS, Hendrik, 58579 Schalksmühle (DE)
(74) Vertreter: Patentanwälte Dörner & Kötter PartG mbB
(86) Internationale Anmeldenummer: PCT/EP2018/072339
(87) Internationale Veröffentlichungsnummer: WO 2019/038204

(56) Entgegenhaltungen:
- FR-A1- 2 985 389
- FR-A1- 2 985 389
- JP-A- 2004 187 364
- KR-B1- 101 673 013

## Beschreibung

Die Erfindung betrifft ein Tisch- oder Geräteplattenanschlussfeld für Netzspannungsanschlüsse und/oder für Informationsanschlüsse, mit einem Gehäuse, das mit einem Kragen versehen ist, wobei ein Steckdoseneinsatz mit Steckplätzen vorgesehen ist, der in dem Gehäuse bewegbar angeordnet ist.

Tisch- oder Geräteplattenanschlussfelder sind in vielfältiger Weise bekannt. Sie stellen die Netzspannung und/oder die Informationsversorgung für bewegliche Datengeräte und andere Stromverbraucher bereit. Die bekannten Vorrichtungen sind in einer Tisch- oder Geräteplatte oder einem Fußboden bewegbar angeordnet. Zum Anschluss der Verbraucher sind die Anschlussfelder aufklappbar. Beim Aufklappen werden die Netzspannungs- und Informationsanschlüsse aus der Platte bzw. dem Fußboden freigelegt und sind somit sichtbar. Die Anschlüsse können in dieser Position zum Einstecken der Stecker der Datengeräte und/oder Stromverbraucher genutzt werden.

Aus der DE 2 116 401 A ist eine Bodenanschlussvorrichtung für elektrische Installationen bekannt, die aus einem Abdeckteil besteht, in dem eine Zugangsöffnung vorgesehen ist. Die Zugangsöffnung nimmt einen Ausgleichsrahmen mit einem Geräteträger für Steckdosen oder dergleichen auf, der aus einem wannenartigen Gehäuse besteht. Das Gehäuse ist an einer seiner Längsseiten um die Achse eines Scharniers in dem Abdeckteil zwischen einer geschlossenen und einer Betriebsposition schwenkbar, wobei der Deckel des Gehäuses in geschlossener Lage bündig mit dem Abdeckteil abschließt. Eine vergleichbare Lösung ist aus der US 2010/0195288 A1 bekannt, wobei zusätzlich zu dem schwenkbaren Gehäuse für Steckdosen und Datenanschlüsse eine ebenfalls schwenkbare Abdeckung vorgesehen ist, die über eine Verbindung mit dem Gehäuse gekoppelt ist, so dass ein Aufschwenken des Gehäuses ein gleichzeitiges Aufschwenken der Abdeckung zur Folge hat, wodurch der Raum zum Einstecken von Steckern vergrößert ist, bspw. für Transformatorstecker.

Aus der DE 10 2014 102 959 A1 ist ein Tisch- oder Geräteplattenanschlussfeld bekannt, bei dem der Steckdoseneinsatz in dem Gehäuse um seine Längsachse drehbar angeordnet. In nicht geöffnetem Zustand bildet die den Steckplätzen des Steckdoseneinsatzes abgewandte Seite die geschlossene Ansichtsseite der Anschlussfelder. Diese schließt in der Regel bündig mit dem sie umgebenden Kragen ab. Durch Drücken auf eine der beiden Längsseiten des Steckdoseneinsatzes erfolgt die Drehung des Steckdoseneinsatzes, so dass die Steckplätze sichtbar werden und der Steckdoseneinsatz seine Betriebsposition einnimmt. Nach dem Abziehen der Stecker kann der Steckdoseneinsatz in seine Ursprungsposition zurückgedreht werden, so dass das Anschlussfeld wieder geschlossen ist.

Bei dem bekannten Tisch- oder Geräteplattenanschlussfeld ist der Steckdoseneinsatz mit einem Vorsprung versehen, in dem die Steckplätze angeordnet sind. Dadurch ist ein Schutz für die Steckplätze im Falle einer sich über die Platte oder den Fußboden ergießende Flüssigkeit bereitstellt. Dies ist dadurch gewehrleistet, dass die Steckplätze in dem Vorsprung angeordnet sind. Dieser Vorsprung ragt in der Betriebsposition des Anschlussfeldes über den die Platte oder den Fußboden bündig abschließenden Kragen hinaus. Infolgedessen stellt eine sich über die Platte oder den Fußboden ergießende Flüssigkeit für die Steckplätze kein Risiko dar, da durch die erhöhte Anordnung der Steckplätze das Einfließen in diese verhindert ist.

Die bekannten Tisch- oder Geräteplattenanschlussfelder erfüllen die an sie gestellten Anforderungen. Allerdings benötigen die bekannten Tisch- oder Geräteplattenanschlussfelder einen recht tiefen Einbauraum, um die 180°-Drehung des Steckdoseneinsatzes mit seinem Vorsprung zu ermöglichen. Dieser Bauraum steht aber in bestimmten Einbausituationen nicht zur Verfügung, beispielsweise dann, wenn die Tisch- oder Geräteplattenanschlussfelder in eine Arbeitsplatte im Bereich von Haushaltsgeräten wie Geschirrspülmaschinen, Waschmaschinen oder Wäschetrocknern verbaut werden sollen. Unter solchen Einbausituationen steht für die bekannten Tisch- oder Geräteplattenanschlussfelder kein ausreichender Einbauraum zur Verfügung. Zudem benötigen die bekannten Anschlussvorrichtungen für elektrische Geräte relativ aufwendige Konstruktionen, um die Schwenk- oder Drehbewegung zur Freigabe der Steckplätze ermöglichen zu können.

Das gilt auch für die aus der FR 2 985 389 A1 bekannte Anschlussvorrichtung. Diese umfasst ein Gehäuse, das in eine Oberfläche einsetzbar und mit einem Deckel verschließbar ist. In dem Gehäuse sind elektrischen Anschlüsse an einem Multiplikationsmechanismus bewegbar vorgesehen. Dieser umfasst zwei Laufschienen, die mit zwei Schlitten zusammenwirken. Zudem sind eine feststehende Zahnstange und eine bewegliche Zahnstange vorgesehen, zwischen denen ein Zahnrad wirkt. An dem Deckel ist das eine Ende einer Steuerstange befestigt, deren anderes Ende an einem Ausleger der zweiten Laufschiene befestigt ist. Ein Öffnen des Deckels um eine Schwenkachse führt zu einer Aufwärtsbewegung der Steuerstange, wodurch die elektrischen Anschlüsse eine Aufwärtsbewegung ausführen.

Hier will die Erfindung Abhilfe schaffen. Der Erfindung liegt die Aufgabe zugrunde, ein Tisch- oder Geräteplattenanschlussfeld für Netzspannungsanschlüsse und/oder Informationsanschlüsse zu schaffen, welches eine geringe Einbautiefe aufweist, konstruktiv einfach aufgebaut ist und gleichzeitig einen Schutz für die Steckplätze im Falle einer sich über die Platte oder den Fußboden ergießende Flüssigkeit bereitstellt. Gemäß der Erfindung wird diese Aufgabe durch die Merkmale der Patentansprüche 1 und 5 gelöst.

Mit der Erfindung ist ein Tisch- oder Geräteplattenanschlussfeld für Netzspannungsanschlüsse und/oder Informationsanschlüsse geschaffen, welches aufklappbar ist, konstruktiv einfach aufgebaut ist, eine geringe Einbautiefe aufweist und gleichzeitig einen Schutz für die Steckplätze im Falle einer sich über die Platte oder den Fußboden ergießende Flüssigkeit bereitstellt. Dies ist dadurch gewährleistet, dass eine Bewegung des Deckels den Steckdoseneinsatz hervortreten lässt, ohne dass der Steckdoseneinsatz eine Dreh- oder Schwenkbewegung ausführt. Der Steckdoseneinsatz des Anschlussfeldes tritt dabei aus seinem geschlossenen Zustand über den die Platte oder den Fußboden bündig abschließenden Kragen hervor und ragt in seiner Betriebsposition über diesen hinaus.

Infolgedessen stellt eine sich über die Platte oder den Fußboden ergießende Flüssigkeit für die Steckplätze kein Risiko da, da durch die erhöhte Anordnung der Steckplätze das Einfließen von schwallartig anfallender Flüssigkeit in die Steckdoseneinsätze verhindert ist.

Das an dem Deckel angeordnete mindestens eine Kopplungselement korrespondiert in montiertem Zustand des Deckels mit der ersten Führung und ist in diesen geführt. Sie unterstützen daher das Hervortreten des Steckdoseneinsatzes aus dem Gehäuse beim Bewegen des Deckels.

Das an dem Deckel vorgesehene mindestens eine Führungselement. korrespondiert in montiertem Zustand des Deckels mit der Führung, wodurch die Bewegung des Deckels das Hervortreten des Steckdoseneinsatzes bewirkt.

Die Erfindung sieht in Ausgestaltung vor, dass der Deckel an seinen beiden Stirnseiten jeweils einen Ausleger hat.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die perspektivische Darstellung eines Tisch- oder Geräteplattenanschlussfeldes in geschlossenem Zustand;
- Figur 2: die perspektivische Darstellung des in Figur 1 dargestellten Tisch- oder Geräteplattenanschlussfeldes in Betriebsposition mit sichtbaren verborgenen Kanten;
- Figur 3: die perspektivische Darstellung des Deckels;
- Figur 4: die perspektivische Darstellung des Steckdoseneinsatzes;
- Figur 5: die perspektivische Darstellung des Gehäuses;
- Figur 6: die perspektivische Darstellung des in Figur 1 dargestellten Tisch- oder Geräteplattenanschlussfeldes in Betriebsposition;
- Figur 7: die perspektivische Darstellung eines Tisch- oder Geräteplattenanschlussfeldes in anderer Ausbildung in geschlossenem Zustand;
- Figur 8: die perspektivische Darstellung des in Figur 7 dargestellten Tisch- oder Geräteplattenanschlussfeldes in Betriebsposition mit sichtbaren verborgenen Kanten;
- Figur 9: die perspektivische Darstellung des in Figur 7 dargestellten Tisch- oder Geräteplattenanschlussfeldes in Betriebsposition;
- Figur 10: die perspektivische Darstellung des Deckels des in Figur 7 darge-stellten Tisch- oder Geräteplattenanschlussfeldes;
- Figur 11: die perspektivische Darstellung des Steckdoseneinsatzes des in Figur 7 dargestellten Tisch- oder Geräteplattenanschlussfeldes;
- Figur 12: die perspektivische Darstellung des Steckdoseneinsatzes des in Figur 7 dargestellten Tisch- oder Geräteplattenanschlussfeldes mit sichtbaren verborgenen Kanten;
- Figur 13: die perspektivische Darstellung des Gehäuses des in Figur 7 dargestellten Tisch- oder Geräteplattenanschlussfeldes.

Die als Ausführungsbeispiele gewählten Tisch- oder Geräteplattenanschlussfelder für Netzspannungsanschlüsse und/oder für Informationsanschlüsse umfassen ein Gehäuse 1, in dem ein Steckdoseneinsatz 2 angeordnet ist. Das Gehäuse 1 ist mit einem Kragen 3 versehen, der in montiertem Zustand des Anschlussfeldes auf der Tisch- oder Geräteplatte bzw. dem Fußboden aufliegt. Der Kragen 3 überdeckt in montiertem Zustand die für die Aufnahme des Anschlussfeldes in der Platte oder dem Fußboden vorgesehene Öffnung.

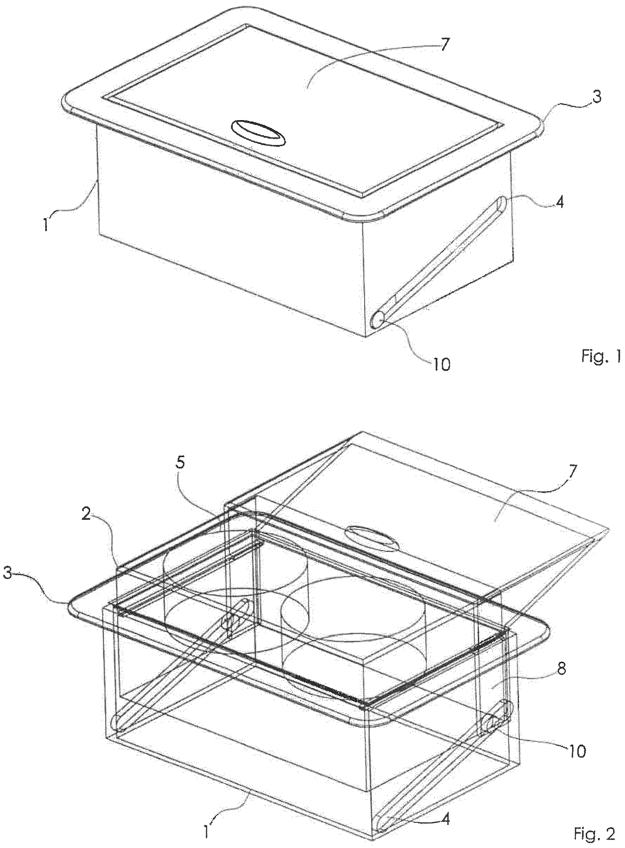

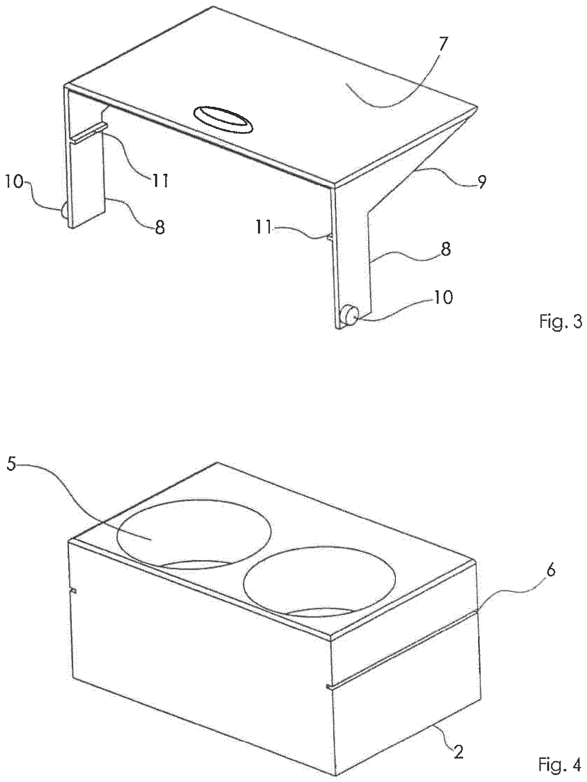

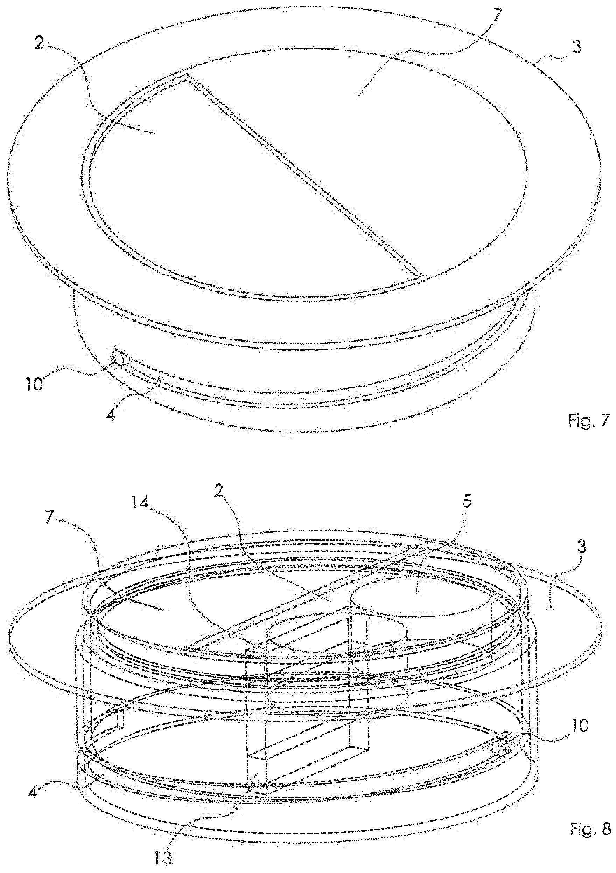

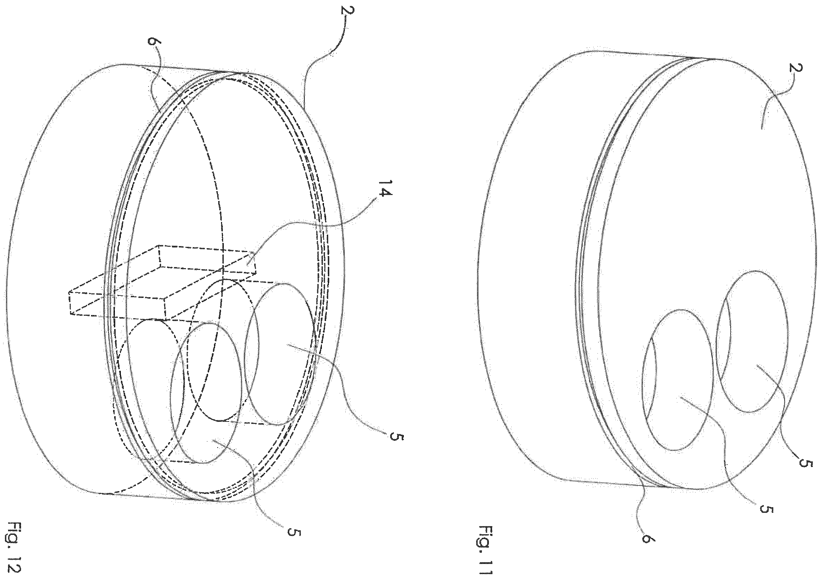

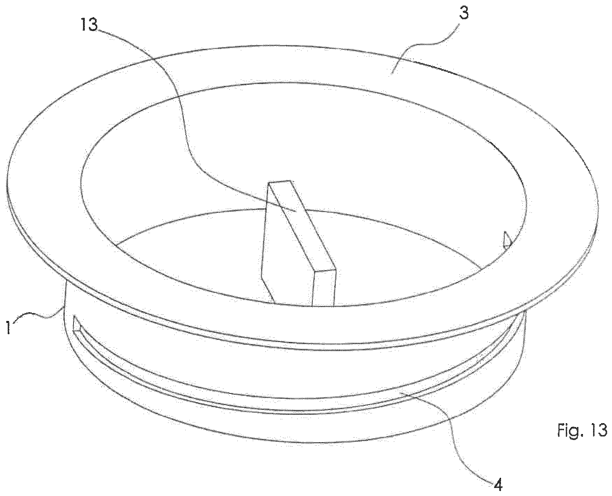

Erkennbar unterscheiden sich die Ausführungsbeispiele in ihrer Grundform: Während die Grundform im Ausführungsbeispiel nach den Figuren 1 bis 6 rechteckig ist, ist sie im Ausführungsbeispiel nach den Figuren 7 bis 13 rund. In Folge dessen erfolgt eine Betätigung der Tisch- oder Geräteplattenanschlussfelder im Ausführungsbeispiel nach den Figuren 1 bis 6 durch Schieben des Deckels 2, während sie im Ausführungsbeispiel nach den Figuren 7 bis 13 durch Drehen des Deckels 2 erfolgt.

Das Gehäuse 1 ist in den Ausführungsbeispielen mit einem Boden versehen und daher nach unten geschlossen. Der Boden kann Schlitze aufweisen, die das Abfließen von in das Gehäuse 1 eintretenden Flüssigkeiten ermöglichen. Ebenso besteht beispielsweise beim Einbau des erfindungsgemäßen Anschlussfeldes in einer Küche die Möglichkeit, Krümel oder der gleichen aus dem Gehäuse 1 zu entfernen. In Abwandlung der Ausführungsbeispiele besteht auch die Möglichkeit, das Gehäuse 1 ohne Boden auszubilden. Das Gehäuse 1 hat in diesem Fall eine rahmenartige Ausgestaltung.

Der Kragen 3 weist auf seiner dem Fußboden oder der Tisch- oder Geräteplatte zugewandten Seite einen - nicht dargestellten - Hinterschnitt auf. Der Hinterschnitt ist zur Aufnahme einer - ebenfalls nicht dargestellten - Dichtung geeignet, so dass eine zusätzliche Sicherheit gegen das Eindringen von sich über die Platte oder den Fußboden ergießenden Flüssigkeiten geschaffen ist.

Das Gehäuse 1 weist mindestens eine erste Führung 4 auf. Die erste Führung 4 ist nach Art eines Schlitzes ausgeführt und hat eine Steigung; sie verläuft folglich unter einem Winkel zur Horizontalen. Im Ausführungsbeispiel nach den Figuren 1 bis 6 ist die Führung 4 jeweils in den Stirnseiten des Gehäuses 1 angeordnet. Die Führung 4 erstreckt sich im Wesentlichen über die gesamte Breite der Stirnseiten des Gehäuses 1. Im Ausführungsbeispiel nach den Figuren 7 bis 13 erstreckt sich die Führung 4 spiralförmig über den halben Umfang des Gehäuses 1.

Der Steckdoseneinsatz 2 ist mit Steckplätzen 5 versehen. Bei den Steckplätzen 5 kann es sich um zwei Steckdosen für Netzspannungsanschlüsse und/oder Steckplätze für Informationsanschlüsse handeln. Selbstverständlich ist eine nahezu beliebige Anzahl an Steckplätzen möglich, zumal die Abmessungen des erfindungsgemäßen Tisch- oder Geräteplattenanschlussfeldes für Netzspannungsanschlüsse und/oder für Informationsanschlüsse variabel sein kann. In dem kreisrund ausgebildeten Steckdoseneinsatz 2 des Ausführungsbeispiels nach den Figuren 7 bis 13 sind die Steckplätzen 5 in einer Hälfte des Steckdoseneinsatzes positioniert.

Der Steckdoseneinsatz 2 weist eine zweite Führung 6 auf. Im Ausführungsbeispiel nach den Figuren 1 bis 6 ist die zweite Führung 6 jeweils in den Stirnseiten des Gehäuses 1 angeordnet. Die Führung 6 ist in diesem Ausführungsbeispiel in einfacher Weise von einer horizontal ausgerichteten Nut gebildet, die sich über die gesamte Breite der Stirnseite des Steckdoseneinsatzes 2 erstreckt. Im Ausführungsbeispiel nach den Figuren 7 bis 13 ist die zweite Führung 6 von einer umlaufenden Nut gebildet.

An dem Tisch- oder Geräteplattenanschlussfeld für Netzspannungsanschlüsse und/oder für Informationsanschlüsse ist ein Deckel 7 vorgesehen, der beweglich ist. Der Deckel 7 überdeckt in geschlossenem Zustand des Anschlussfeldes den Steckdoseneinsatz 2 derart, dass die Steckplätze 5 geschützt sind (vgl. Figuren 1 und 7). Im Ausführungsbeispiel nach den Figuren 1 bis 6 hat der Deckel 7 in Bezug auf die abzudeckende Fläche eine Größe, die der Fläche des Steckdoseneinsatzes 2 entspricht. Folglich überdeckt der Deckel 7 in geschlossenem Zustand den Steckdoseneinsatz 2 vollständig (vgl. Figur 1). Im Ausführungsbeispiel nach den Figuren 7 bis 13 hat der Deckel 7 die Form eines Halbkreises. Folglich überdeckt der Deckel 7 in geschlossenem Zustand den Steckdoseneinsatz 2 lediglich zur Hälfte (vgl. Figur 7).

Im Ausführungsbeispiel nach den Figuren 1 bis 6 hat der Deckel 7 an seinen beiden Stirnseiten jeweils einen Ausleger 8, der an einem Ende der Stirnseite angeordnet ist. Der Ausleger 8 hat eine Länge, die im Wesentlichen der Höhe des Gehäuses 1 entspricht. Von jedem Ausleger 8 erstreckt sich eine Wange 9 entlang der Stirnseite zur Längsseite des Deckels 7. Die Wangen 9 haben eine dreieckige Form. Die die Hypotenuse der Wange 9 bildende Kante verläuft in moniertem Zustand parallel zur ersten Führung 4. Im Bereich der freien Enden der Ausleger 8 ist jeweils auf den einander abgewandten (Außen-)Seiten der Ausleger 8 ein Kopplungselement 10 angeordnet. Im Ausführungsbeispiel nach den Figuren 7 bis 13 ist das Kopplungselement 10 außen an dem Deckel 7 vorgesehen, und zwar auf der Außenseite einer ringsum verlaufenden Mantelfläche 12. Die Kopplungselemente 10 korrespondieren in montiertem Zustand des Deckels 7 in allen Ausführungsbeispielen mit der ersten Führung 4; die Kopplungselemente 10 sind in den schlitzartigen Führungen 4 geführt. Der Durchmesser der Kopplungselemente 10 entspricht daher im Wesentlichen der lichten Weite der Führung 4.

An dem Deckel 7 ist im Ausführungsbeispiel nach den Figuren 1 bis 6 auf den einander zugewandten (Innen-)Seiten der Ausleger 8 jeweils ein Führungselement 11 vorgesehen. Die Führungselemente 11 korrespondieren in montiertem Zustand des Deckels 7 mit der Führung 6; die Führungselemente 11 sind in den nach Art einer Nut ausgebildeten Führungen 6 geführt. Im Ausführungsbeispiel nach den Figuren 7 bis 13 ist das Führungselement 11 auf der Innenseite des Deckels 7 vorgesehen, und zwar auf der Innenseite der Mantelfläche 12. Auch hier Ist das Führungselement 11 in der nach Art einer Nut ausgebildeten zweiten Führung 6 geführt.

Das Tisch- oder Geräteplattenanschlussfeld gemäß dem Ausführungsbeispiel nach den Figuren 7 bis 13 weist zusätzlich eine zusätzliche Verdrehsicherung zwischen Gehäuse 1 und Steckdoseneinsatz 2 auf. Diese ist in diesem Ausführungsbeispiel einerseits von einem Zapfen 13 gebildet, der nach Art eines Quaders ausgeführt ist. Der Zapfen 13 ist im Zentrum des Gehäuses 1 positioniert. Er korrespondiert in montiertem Zustand mit einem Schlitz 14, der sich im Zentrum des Steckdoseneinsatzes 2 befindet und der im Ausführungsbeispiel nach Art eines ausgehölten Quaders ausgebildet ist und den Zapfen 13 umgibt.

Bei dem erfindungsgemäßen Tisch- oder Geräteplattenanschlussfeld steht der Deckel 7 mit der ersten Führung 4 und der zweiten Führung 6 derart formschlüssig in Verbindung, dass eine Bewegung des Deckels 7 relativ zum Gehäuse 1 ein Hervortreten des Steckdoseneinsatzes 2 aus dem Gehäuse 1 zur Folge hat.

Beim Schieben des Deckels 7 parallel zu dessen Stirnseiten erfährt der Deckel 7 im Ausführungsbeispiel nach den Figuren 1 bis 6 eine Aufwärtsbewegung, die einerseits durch die in der ersten Führung 4 geführten Kopplungselemente 10 hervorgerufen ist, andererseits durch die Hypotenuse der dreieckförmigen Wangen 9, die im Bereich des Kragens 3 entlang der Längsseite des Gehäuses 1 gleiten. Im Ausführungsbeispiel nach den Figuren 7 bis 13 führt ein Drehen des Deckels 7 ebenfalls eine Aufwärtsbewegung des Deckels 7 herbei, die durch die in der ersten Führung 4 geführten Kopplungselemente 10 hervorgerufen ist. Durch die Verdrehsicherung ist gewährleistet, dass lediglich der Deckel 7 drehbar ist, so dass der Steckdoseneinsatz 2 keine Drehbewegung erfährt. Die Bewegung des Deckels 7 erfolgt dabei jeweils relativ zum Steckdoseneinsatz 2, wobei die Führungselemente 11 durch die nach Art einer Nut ausgebildeten zweiten Führungen 6 gleiten. Dabei führt die beschriebene Aufwärtsbewegung des Deckels 7 eine lineare und vertikal ausgerichtete Aufwärtsbewegung des Steckdoseneinsatzes 2 herbei. Die Schiebe- bzw. Drehbewegung und damit auch die Aufwärtsbewegung enden, wenn die Kopplungselemente 10 das Ende der ersten Führung 4 erreichen. Im Ausführungsbeispiel nach den Figuren 1 bis 6 stoßen in dieser Position die Ausleger 8 an das Gehäuse 1 an, wie dies in Figur 2 dargestellt ist.

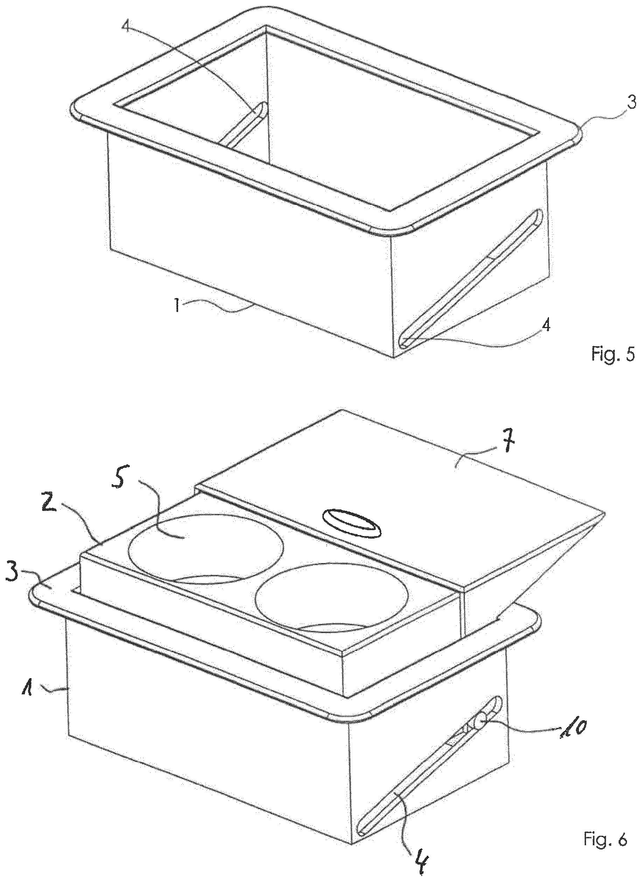

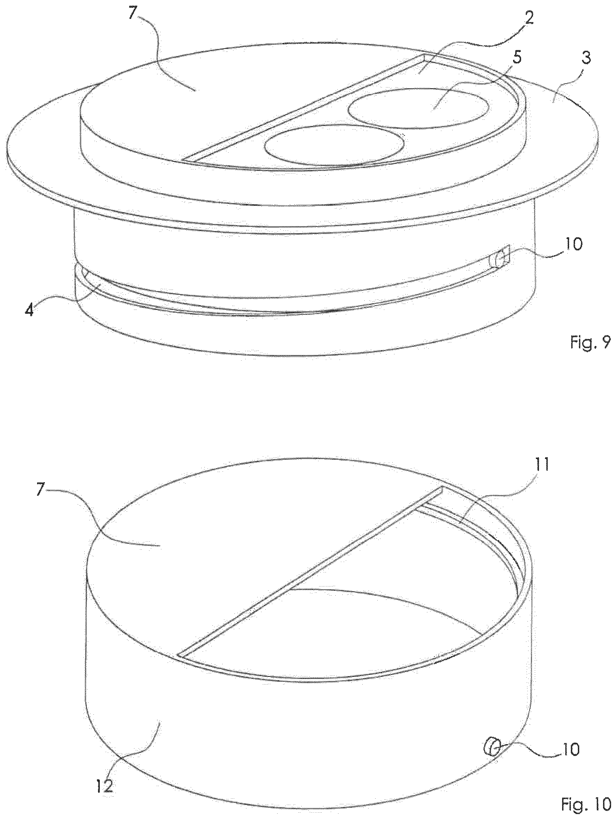

In dieser Position sind die Steckplätze 5 vollständig von dem Deckel 7 freigegeben, so dass diese ohne Einschränkung nutzbar sind (vgl. Figuren 6 und 9). Erkennbar steht der Steckdoseneinsatz 2 in dieser Betriebsposition des Anschlussfeldes über den Kragen 3 und damit auch über die Tisch- oder Geräteplatte bzw. den Fußboden hervor. Sollte sich in Betriebsposition Flüssigkeit über die Platte oder den Fußboden ergießen, kann sich diese zwar über den Kragen 3 in Richtung des Steckdoseneinsatzes 2 ergießen; die Steckplätze 5 sind jedoch gegen sich ergießende Flüssigkeit aufgrund ihrer erhöhten Anordnung gesichert.

Um das Anschlussfeld wieder in die geschlossene Position zu bringen, ist es lediglich erforderlich, den Deckel 7 zurück zu schieben oder zu drehen, wodurch der Steckdoseneinsatz 2 eine vertikale und lineare Abwärtsbewegung ausführt. Die Schiebe- bzw. Drehbewegung und damit auch die Abwärtsbewegung enden, wenn die Kopplungselemente 10 das Ende der ersten Führung 4 erreichen. Der Deckel 7 überdeckt dann den Steckdoseneinsatz 2 wieder und die Steckplätze 5 sind geschützt, so dass das Anschlussfeld seinen geschlossenen Zustand eingenommen hat (vgl. Figuren 1 und 7).

In Abwandlung des Ausführungsbeispiels nach den Figuren 7 bis 13 kann auch eine Umkehr von Verdrehsicherung und erster Führung vorgenommen werden. So kann beispielsweise im Zentrum des Gehäuses eine Art Dom angeordnet sein, der ein Gewinde aufweist, welches die Funktion der ersten Führung übernimmt. Das Gewinde korrespondiert dann mit einer an dem Steckdoseneinsatz angeordneten Hülse mit Innengewinde. Eine umgekehrte Anordnung ist selbstverständlich ebenfalls möglich. Die Verdrehsicherung kann dann außen verlagert sein. Die zweite Führung kann dann beispielsweise von einer vertikal ausgerichteten Nut gebildet sein, die ein stiftartiges oder flächenartiges Element führen. Der Deckel ist bei einer solchen Ausführung vorzugsweise ohne Mantelfläche gestaltet.

Die erfindungsgemäßen Ausgestaltungen stellen eine zuverlässige Absicherung gegen das Eindringen von schwallartig anfallenden Flüssigkeiten in die Steckplätze bei Anwendungen des Anschlussfeldes in Bereichen dar, in denen mit Flüssigkeiten hantiert wird. Gleichzeitig kann in das Gehäuse 1 eintretende Flüssigkeit aus dem Gehäuse 1 austreten, wenn kein Boden vorgesehen ist oder ein eventuell vorhandener Boden mit Schlitzen versehen ist.

Aufgrund des Schiebe- bzw. Drehmechanismus weist das Anschlussfeld nach der vorliegenden Erfindung eine geringe Einbautiefe auf. Es ist daher auch in Bereichen von Arbeitsplatten einbaubar, in denen Haushaltsgeräte verbaut sind und daher keine Einbauhöhe zur Verfügung steht, die den Einbau von schwenkbaren Anschlussfeldern ermöglichen. Folglich verbindet das Tisch- oder Geräteplattenanschlussfeld für Netzspannungsanschlüsse und/oder für Informationsanschlüsse nach der vorliegenden Erfindung die Vorzüge solcher schwenkbaren Anschlussfelder in Bezug auf die vollständige Abdeckung der Steckplätze im Ruhezustand und dem Schutz gegen das Eindringen von Flüssigkeiten in die Steckplätze in Betriebsposition mit einer geringen Einbautiefe, die eine Verwendung auch dann ermöglicht, wenn lediglich geringe Einbauhöhe zur Verfügung steht. Darüber hinaus kann erfindungsgemäß auf die relativ aufwendige Konstruktion eines Scharniers oder Gelenks zur Herbeiführung der aus dem Stand der Technik bekannten Schwenkbewegung des jeweiligen Steckdoseneinsatzes verzichtet werden.

## Patentansprüche

1. Tisch- oder Geräteplattenanschlussfeld für Netzspannungsanschlüsse und/oder für Informationsanschlüsse, mit einem Deckel (7) und einem Gehäuse (1), das mit einem Kragen (3) versehen ist, wobei ein Steckdoseneinsatz (2) mit Steckplätzen (5) vorgesehen ist, der in dem Gehäuse (1) bewegbar angeordnet ist, **dadurch gekennzeichnet, dass**
- das Gehäuse (1) eine erste Führung (4) und der Steckdoseneinsatz (2) eine zweite Führung (6) aufweist und der Deckel (7) mit der ersten Führung (4) und der zweiten Führung (6) derart formschlüssig in Verbindung steht, dass eine Schiebebewegung des Deckels (7) relativ zum Gehäuse (1) eine vertikale und lineare Bewegung sowie ein Hervortreten des Steckdoseneinsatzes (2) aus dem Gehäuse (1) zur Folge hat,
- dass die erste Führung (4) unter einem Winkel zur Horizontalen verläuft,
- dass an dem Deckel (7) mindestens ein Kopplungselement (10) angeordnet ist,
- dass an dem Deckel (7) mindestens ein Führungselement (11) vorgesehen ist ,
- dass das mindestens eine Kopplungselement (10) in montiertem Zustand des Deckels (7) mit der ersten Führung (4) korrespondiert,
- und dass das mindestens eine Führungselement (11) in montiertem Zustand des Deckels (7) mit der zweiten Führung (6) korrespondiert.

2. Anschlussfeld nach Anspruch 1, **dadurch gekennzeichnet, dass** der Deckel (7) an seinen beiden Stirnseiten jeweils einen Ausleger (8) hat.

3. Anschlussfeld nach Anspruch 2, **dadurch gekennzeichnet, dass** sich von jedem Ausleger (8) eine Wange (9) entlang der Stirnseite erstreckt.

4. Anschlussfeld nach Anspruch 3, **dadurch gekennzeichnet, dass** die Wangen (9) eine dreieckige Form haben.

5. Tisch- oder Geräteplattenanschlussfeld für Netzspannungsanschlüsse und/oder für Informationsanschlüsse, mit einem Deckel (7) und einem Gehäuse (1), das mit einem Kragen (3) versehen ist, wobei ein Steckdoseneinsatz (2) mit Steckplätzen (5) vorgesehen ist, der in dem Gehäuse (1) bewegbar angeordnet ist, **dadurch gekennzeichnet,**
- **dass** das Gehäuse (1) eine erste Führung (4) und der Steckdoseneinsatz (2) eine zweite Führung (6) aufweist und der Deckel (7) mit der ersten Führung (4) und der zweiten Führung (6) derart formschlüssig in Verbindung steht, dass eine Drehbewegung des Deckels (7) relativ zum Gehäuse (1) eine vertikale und lineare Bewegung sowie ein Hervortreten des Steckdoseneinsatzes (2) aus dem Gehäuse (1) zur Folge hat,
- **dass** die erste Führung (4) unter einem Winkel zur Horizontalen verläuft
- **dass** an dem Deckel (7) mindestens ein Kopplungselement (10) angeordnet ist,
- **dass** an dem Deckel (7) mindestens ein Führungselement (11) vorgesehen ist,
- **dass** das mindestens eine Kopplungselement (10) in montiertem Zustand des Deckels (7) mit der ersten Führung (4) korrespondiert,
- und **dass** das mindestens eine Führungselement (11) in montiertem Zustand des Deckels (7) mit der zweiten Führung (6) korrespondiert.

6. Anschlussfeld nach Anspruch 5, **dadurch gekennzeichnet, dass** eine Verdrehsicherung (13) zwischen Gehäuse (1) und Steckdoseneinsatz (2) vorgesehen ist.

## Claims

1. Table-top or equipment-top connection compartment for mains voltage connections and/or for information connections, with a cover (7) and a housing (1), which is provided with a collar (3), wherein a socket insert (2) with plug-in locations (5) is provided, which is movably arranged in the housing (1), **characterised in that**
- the housing (1) has a first guide (4) and the socket insert (2) has a second guide (6) and the cover (7) is positively connected to the first guide (4) and the second guide (6) in such a manner that a sliding movement of the cover (7) relative to the housing (1) results in a vertical and linear movement as well as a protrusion of the socket insert (2) from the housing (1),
- the first guide (4) runs at an angle to the horizontal,
- at least one coupling element (10) is arranged on the cover (7),
- at least one guide element (11) is provided on the cover (7),
- at least one coupling element (10) corresponds with the first guide (4) in the mounted state of the cover (7),
- and **in that** the at least one guide element (11) corresponds with the second guide (6) in the mounted state of the cover (7).

2. Connection compartment according to claim 1, **characterised in that** the cover (7) has an extension arm (8) on each of its two end faces.

3. Connection compartment according to claim 2, **characterised in that** a cheek (9) extends from each extension arm (8) along the end face.

4. Connection compartment according to claim 3, **characterised in that** the cheeks (9) have a triangular shape.

5. Table-top or equipment-top connection compartment for mains voltage connections and/or for information connections, with a cover (7) and a housing (1), which is provided with a collar (3), wherein a socket insert (2) with plug-in locations (5) is provided, which is movably arranged in the housing (1), **characterised in that**
- the housing (1) has a first guide (4) and the socket insert (2) has a second guide (6) and the cover (7) is positively connected to the first guide (4) and the second guide (6) in such a manner that a rotational movement of the cover (7) relative to the housing (1) results in a vertical and linear movement as well as a protrusion of the socket insert (2) from the housing (1),
- the first guide (4) runs at an angle to the horizontal,
- at least one coupling element (10) is arranged on the cover (7),
- at least one guide element (11) is provided on the cover (7),
- the at least one coupling element (10) corresponds with the first guide (4) in the mounted state of the cover (7),
- and **in that** the at least one guide element (11) corresponds with the second guide (6) in the mounted state of the cover (7).

6. Connection compartment according to claim 5, **characterised in that** an anti-rotation device (13) is provided between housing (1) and socket insert (2).

## Revendications

1. Compartiment de connexion pour plateau de table ou d'appareil, destiné à des connexions à la tension du réseau, et/ou à des connexions informatiques, comprenant un couvercle (7) et un boîtier (1) muni d'une collerette (3), sachant qu'est prévu un insert (2) pour prises avec emplacements d'enfichage (5), insert qui est disposé déplaçable dans le boîtier (1), **caractérisé en ce**
- **que** le boîtier (1) présente un premier guidage (4) et que l'insert (2) pour prises présente un deuxième guidage (6), et que le couvercle (7) se trouve relié par adhérence de formes avec le premier guidage (4) et le deuxième guidage (6), de sorte qu'un mouvement coulissant du couvercle (7) relativement au boîtier (1) a pour conséquence un mouvement vertical et linéaire ainsi qu'une sortie en avant de l'insert (2) à prises hors du boîtier (1),
- **que** le premier guidage (4) présente un tracé en angle par rapport à l'horizontale,
- **que** contre le couvercle (7) est disposé au moins un élément de couplage (10),
- **que** contre le couvercle (7) est prévu au moins un élément de guidage (11),
- **qu'**au moins un élément de couplage (10) épouse le premier guidage (4) lorsque le couvercle (7) est à l'état monté,
- et **qu'**au moins un élément de guidage (11) épouse le deuxième guidage (6) lorsque le couvercle (7) est à l'état monté.

2. Compartiment de connexion selon la revendication 1, **caractérisé en ce que** le couvercle (7) présente une flèche (8) respectivement sur ses deux côtés frontaux.

3. Compartiment de connexion selon la revendication 2, **caractérisé en ce que** depuis chaque flèche (8) s'étend une paroi (9) le long du côté frontal.

4. Compartiment de connexion selon la revendication 3, **caractérisé en ce que** les parois (9) sont de forme triangulaire.

5. Compartiment de connexion pour plateau de table ou d'appareil, destiné à des connexions à la tension du réseau, et/ou à des connexions informatiques, comprenant un couvercle (7) et un boîtier (1) muni d'une collerette (3), sachant qu'est prévu un insert (2) pour prises avec emplacements d'enfichage (5), insert qui est disposé déplaçable dans le boîtier (1), **caractérisé en ce**
- **que** le boîtier (1) présente un premier guidage (4) et que l'insert (2) pour prises présente un deuxième guidage (6), et que le couvercle (7) se trouve relié par adhérence de formes avec le premier guidage (4) et le deuxième guidage (6), de sorte qu'un mouvement rotatif du couvercle (7) relativement au boîtier (1) a pour conséquence un mouvement vertical et linéaire ainsi qu'une sortie en avant de l'insert (2) à prises hors du boîtier (1),
- **que** le premier guidage (4) présente un tracé en angle par rapport à l'horizontale,
- **que** contre le couvercle (7) est disposé au moins un élément de couplage (10),
- **que** contre le couvercle (7) est prévu au moins un élément de guidage (11),
- **qu'**au moins un élément de couplage (10) épouse le premier guidage (4) lorsque le couvercle (7) est à l'état monté,
- et **qu'**au moins un élément de guidage (11) épouse le deuxième guidage (6) lorsque le couvercle (7) est à l'état monté.

6. Compartiment de connexion selon la revendication 5, **caractérisé en ce qu'**une sécurité antitorsion (13) est prévue entre le boîtier (1) et l'insert (2) pour prises.
